# EUROPEAN PATENT APPLICATION

(11) **EP 2 138 940 A1**
(43) Date of publication of application: **30.12.2009**
(21) Application number: 08305295.1
(22) Date of filing: 23.06.2008
(51) Int. Cl.: G06F 17/30

(54) **A system and method for automatically generating an extra data layer**

(71) Applicant: Alcatel Lucent, 75008 Paris (FR)
(72) Inventor: Hemmeryckx-Deleersnijder, Bart Karel, 9090, Melle (BE); Moons, Jan, 2220, Heist-op-den-berg (BE); De Mondt, Hans, 2960, Brecht (BE); Verde, Orlando, 2018, Antwerpen (BE)
(74) Representative: D'Halleweyn, Nele Veerle Trees Gertrudis

(57) **Abstract**

A system is disclosed for automatically generating and outputting selected associated information in the form a an extra data layer for a set of at least one media object, comprising
- a means for parsing the set of media objects for meta-data (2);
- a means for searching for associated information relating to the meta-data (4) in a database (5);
- a human-machine interfacing device (7);

characterised in that it further comprises
- means for generating the extra data layer (9), based on a set of constraint rules (12), the means being adapted for selecting information from the associated information, respecting the available output capacity for said human-machine interfacing device;
- means for outputting the selected associated information (11) to the human-machine interfacing device (7).

Also corresponding methods and modules have been disclosed.

## Description

### Technical field of the invention

The present invention relates to the field of systems and methods automatically generating and outputting selected associated information in the form of an extra data layer for a set of at least one media object.

### Background of the invention

The application "MemoryMiner" [http://memoryminer.com] is an application which is used to organize and share digital media using a metaphor, namely "People, Places and Time". At its core resides a set of tools adapted for treating photos as individual frames in a type of endless story board. A variety of other digital media, including sound, video, documents and URLs, can be added to each frame. The story elements are linked to each other by way of annotation layers identifying the people, places, dates and events captured in each frame, and can be exported for automatic publishing online.

In the paper "Image annotation with Photocopain", Tuffield et al., Proceedings First International Workshop on Semantic Web Annotations for Multimedia (SWAMM 2006), Edinburgh, Scotland, systems are described which provide semi automatic meta-data (data about data) annotation by combining the context where a photograph was captured with information form readily available data sources.

In prior art methods and systems, meta-data of media is used in order to generate a story, a data layer, comprising this media itself.

Today, each data object carries a list of explicit meta-data and can be associated with a list of implicit meta-data (which can be built up through association). Explicit meta-data can be seen as directly attached to the data. Implicit meta-data can be seen as associated meta-data, which can be retrieved by association, and can in principle be of infinite nature.

By outputting all of this meta-data in a straight forward way, the value of the meta-data which is output to an human-machine interfacing device may for instance loose its readability, sensibility, audibility for a human user who is interfacing this human-machine interface.

### Summary of the invention

In state of the art systems, meta-data abundance exists which may cause that the output of the meta-data to a human-machine interface is not readable, sensible or audible for a human user who is interfacing this human-machine interface.

Therefore there exists a need for systems and methods which are capable of controlling the output of meta-data, e.g. by providing a readable and/or sensible and/or audible delivery to or interaction with a user.

It is an object of the present invention to provide systems and methods which solve at least one of the above problems.

In an aspect of the present invention systems and methods are disclosed, which provide a readable and/or sensible and/or audible delivery to or interaction with a user.

In another aspect of the present invention systems and methods are disclosed, which are able to provide an extra data layer, on top of the media data, the media data itself not being part of the extra data layer, and to output it to a human-machine interfacing device.

According to a first aspect of the present invention a system is disclosed for automatically generating and outputting selected associated information for a set of at least one media object. The selected associated information can be provided in the form of an extra data layer. With the term "associated information" is meant: information which is related with the set of at least one media object based on a predetermined relationship or context.

According to first aspect of the present invention, the system further comprises a means for parsing the set of media objects for meta-data (2). Meta-data is known in the art as "data about data". This can be for instance be extra data about media data, wherein the media data is the data for which information is given in the extra data being meta-data associated with this media data. For instance a picture taken by a digital camera will typically comprise meta-data in the form of for instance the amount of pixels in the picture, the size of the picture, the number of the picture, the illumination level of the picture, etc. During the parsing process meta-data information is extracted from the object. This meta-data information may be explicitly or implicitly derived by means of a process of association. Such an association process may comprise image recognition, determination of the location or dating of the picture, etc.

The system may further comprise a means for searching for associated information relating to the meta-data (4) in a database (5). The means for searching (searching means) for associated information relating to the meta-data (4) may be adapted in order to search in an independent database (5), as for instance for the available databases on the internet, or may be adapted for searching into an independent database or may be adapted for searching into a database which is especially provided for searching for associated information relating to the meta-data. The searching process may further be directed towards a search into a particular field or a particular context of meta-data. For instance the means for searching may be adapted for searching for meta-data relating to the location of where the picture was taken or it may be adapted for searching for information about the persons which are depicted in the figure. The database (5) may be a database comprising geographical and tourist information for instance. It may also comprise other information which may be linked with time information and/or historical information and/or geographical information.

According to other embodiments of the present invention the system further comprises a human machine interfacing device(7). This device is adapted for interfacing with a human user. This device can for instance be a display, a speaker or any other means that can exchange information to the user. This device may further comprise a keyboard, mouse or any other means for providing information towards the system as for instance for putting constraint rules into the system or consulting or modifying them. The human-machine interfacing device may for instance be a multimedia- enabled personal computer.

According to embodiments of the present invention a means for determining the available output capacity for the extra data layer for the human-machine interfacing device (8) can be provided. The means for determining the available output capacity can for instance be adapted for determining and/or retrieving the time period available for the extra data layer, which is time dependent.

According to embodiments of the present invention the means for determining the output capacity can be adapted for retrieving the available displaying surface of the human machine interfacing device. For instance, a display or a subarea of a display may be dedicated for displaying the extra data layer and thus selected meta-data information, such that it can be seen, experienced , interpreted by a human reader who is interacting with the human-machine interfacing device. By determining the available displaying surface for the selected associated information the system becomes aware of the amount of information it can output towards the human-machine interfacing device. In function of the available surface the displaying device, possibly in combination with the time period available for the extra data layer, the system can than select appropriate selected annotation information such that it does not overload the system of the human-machine interfacing device. The system may hereby also provide an information output to a human user interacting with the human machine interfacing device which is adapted for being read and/or heard by the user, or which makes sense to the user. The selected annotation information can therefore be presented in a readable, hearable, sensible way for a human user who is interfacing this human machine interface.

Accordingly, according to embodiments of the present invention, means for generating the extra data layer (9) are preferably provided, based on a set of constraint rules (12) , possible stored in a constraint rule module (10), the means being adapted for selecting information from the associated information, respecting the available output capacity for the human-machine interfacing device.

The constraint rules (12), which may be stored in a means for storing the constraint rules (10), may be managed automatically and may be set by the user via for instance the human-machine interfacing device.

The system according to embodiments of the present invention can also comprise a means for outputting the selected associated information to the human machine interfacing device (11).

The system may also comprise a data storage means for storing a set of media objects (1).

The system may further comprise a means for storing the meta-data (3).

The system may further comprise a means for storing the associated information (6).

The output capacity may be expressed in available displaying surface of the human machine interfacing device, or time period available for the extra data layer, which is time dependent, but may also be based on other parameters. It may for instance be based on the bandwidth capacity from the system towards the human machine interfacing device. It may also depend on the setting of the user of the human machine interface, it may depend on the hardware of the human machine interfacing device. It may depend on the user's capabilities or disabilities [a blind user may be provided with audio type meta-data]. It may depend on the status or context of the user; e.g. while driving a car an audio annotation can be provided.

According to embodiments of the present invention a means for setting a modifying the constraint rules may further be comprised. The constraint rules (12) are a set of rules which determine the selection of selected associated information, which should be output to the human machine interfacing device. The set of rules may comprise rules or limitations based on media type, for instance a rule may define that the selected associated information has to be outputted in the form of text, pictures, video, or other means. The set of constraint rules may also define the context of the associated information which is to be selected. The context may comprise limitations towards associated meta-data information coming from certain users, coming out from certain areas, applied in certain technical domains, certain interest area. A set of rules may also comprise preferences information from users. The set of rules may be filled in automatically by for instance a network operator based on the user's profile existing with such operator. The set of rules may be amended by the user or may be amended in a certain context or limited extent only. It is to be noted that for the present description the term "associated information" may be information which is retrieved by for instance crawling databases and hereby performing facts discovery. The set of rules may also define the structure or the layout or the ontology of the selected associated information to be used.

In a second aspect of the present invention, a method for automatically generating an extra data layer for a set of at least one media object is disclosed, comprising
- parsing the set of media objects for meta-data;
- searching for associated information relating to the meta-data in a database;
- outputting the associated information to the human-machine interfacing device;
   that further comprises
- determining the available output capacity of a human-machine interfacing device for the extra data layer;
- generating the extra data layer, based on a set of constraint rules, by selecting information from the associated information, selected associated information, hereby respecting the available output capacity.

According to preferred embodiments of the present invention, determining the available output capacity for a human-machine interfacing device for the extra data layer comprises retrieving the available time period available for the extra data layer, which is time dependent.

According to preferred embodiments of the present invention, determining the available output capacity for a human-machine interfacing device for the extra data layer comprises retrieving the available displaying surface of the human-machine interfacing device.

According to preferred embodiments of the present invention, determining the available output capacity for a human-machine interfacing device for the extra data layer comprises retrieving the available displaying surface of the human-machine interfacing device and the available time period available for the extra data layer, which may be time dependent.

According to a third aspect of the present invention, a module is disclosed adapted for generating an extra data layer for a set of at least one media object, based on selected associated information for said set of media object(s), wherein the module comprises a means for determining the available output capacity for the extra data layer for a predetermined human-machine interfacing device.

According to preferred embodiments, the module further comprises a means for storing a set of constraint rules (12) defining constraints for the generation of said extra data layer.

Features and embodiments for the second and third aspect of the present invention, corresponding to features and embodiments of the first aspect of the present invention, are similarly considered to be within the scope of the present invention, as will be recognised by the person of ordinary skill.

Further aspects and embodiments of the present invention are described by the dependent claims. The features from the dependent claims, features of any of the independent claims and any features of other dependent claims may be combined as considered appropriate to the person of ordinary skill, and not only in the particular combinations as defined by the claims.

Any of the functions described herein can be implemented using software, firmware (e.g., fixed logic circuitry), hardware, manual processing, or a combination of these implementations. The terms "module," "component", "functionality," and "logic" as used herein generally represent software, firmware, hardware, or any combination thereof. In the case of a software implementation, the module, component, functionality, or logic represents program code that performs specified tasks when executed on processor(s) (e.g., any of microprocessors, controllers, and the like). The program code can be stored in one or more computer readable memory devices. Further, the methods and systems described herein are platform-independent such that the techniques may be implemented on a variety of commercial computing platforms having a variety of processors.

Methods in accordance with the present invention may also be described in the general context of computer executable instructions. Generally, computer executable instructions can include routines, programs, objects, components, data structures, procedures, modules, functions, and the like that perform particular functions or implement particular abstract data types. The methods described herein may also be practiced in a distributed computing environment where functions are performed by remote processing devices that are linked through a communications network. In a distributed computing environment, computer executable instructions may be located in both local and remote computer storage media, including memory storage devices.

Various modules and techniques may be described herein in the general context of computer-executable instructions, such as program modules, executed by one or more computers or other devices. Generally, program modules include routines, programs, objects, components, data structures, and so forth for performing particular tasks or implement particular abstract data types. These program modules and the like may be executed as native code or may be downloaded and executed, such as in a virtual machine or other just-in-time compilation execution environment. Typically, the functionality of the program modules may be combined or distributed as desired in various embodiments. An implementation of these modules and techniques may be stored on or transmitted across some form of computer readable media.

### Brief description of the drawings

The accompanying drawings are used to illustrate embodiments of the present invention.

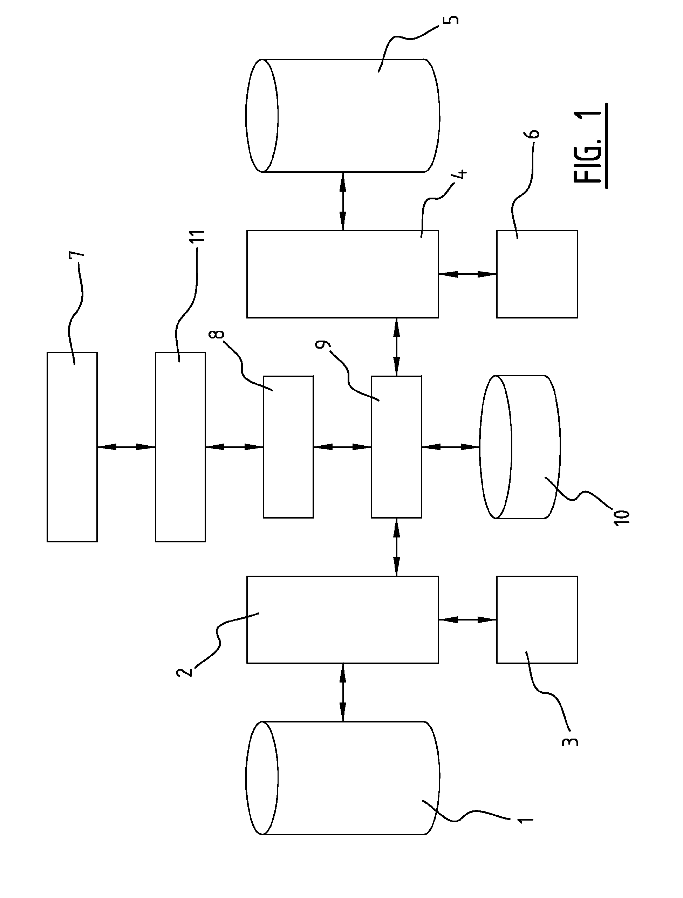

Fig. 1 illustrates a system according to embodiments of the present invention.

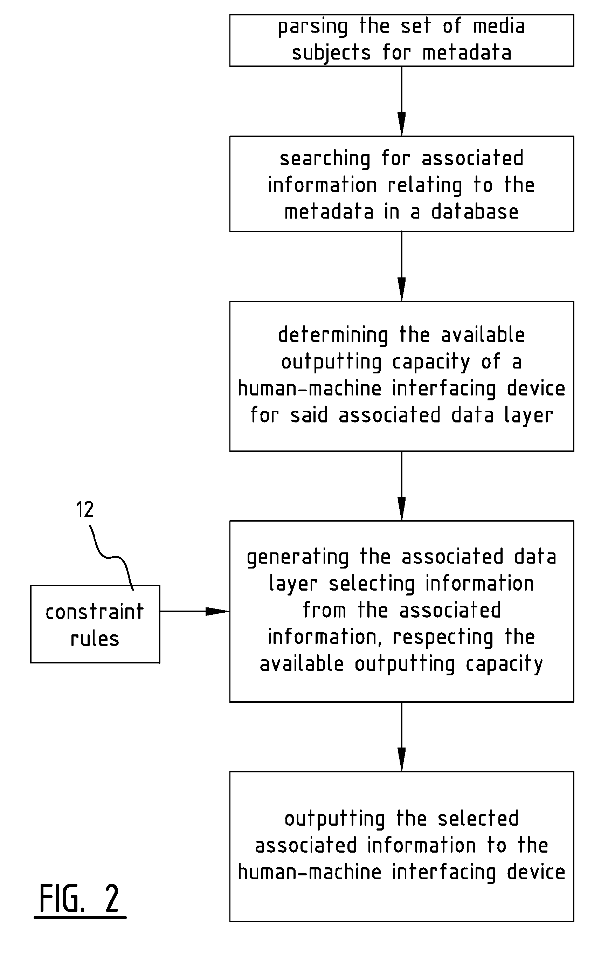

Fig. 2 is a flowchart illustrating methods according to embodiments of the present invention.

Fig. 3 illustrates a possible system architecture according to embodiments of the present invention.

Reference signs are chosen such that they are the same for similar or equal elements or features in different figures or drawings.

### Description of illustrative embodiments

The above and other advantageous features and objects of the invention will become more apparent and the invention will be better understood from the following detailed description when read in conjunction with the respective drawings.

The description of aspects of the present invention is performed by means of particular embodiments and with reference to certain drawings but the invention is not limited thereto. Depicted figures are only schematic and should not be considered as limiting. E.g. certain elements or features may be shown out of proportion or out of scale with respect to other elements.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

In an aspect of the present invention, a meta-data list associated with a multimedia object can be used to generate an output to a human-machine interfacing device (e.g. a description or story that further enriches the original multimedia object). This story or description can be added to the multi media item as an extra layer.

For example: consider a set of pictures taken on a trip to city X. There are state of the art systems that can annotate these pictures with GPS location data. The pictures can be uploaded to the Media Vault or Media Cache (1) of the system (called e.g. Narrative Description Generator). The pictures can be associated with facts about the different locations where of the pictures were taken in city X. This way a storyline/narrative as for instance text or voice can be added to the output towards the human-machine interfacing device, such that a user can appreciate and experience this extra information.

In an aspect of the present invention, the meta-data is used to generate a new multimedia layer on top of an existing multimedia item or set of multimedia items. As such the invention brings a new way of making meta-data associated with media items in another multimedia layer (this layer can be music, text, sound, etc., or a combination of these).

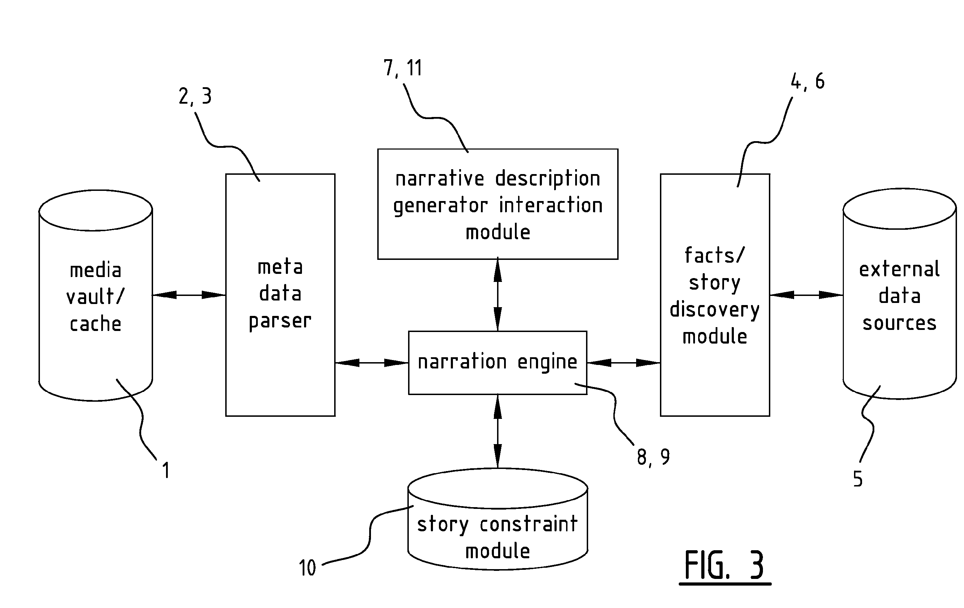

The system (Narrative description generator) can comprise for instance:
- a Media Vault or Cache (1) (see Fig. 3), where pictures can be uploaded comprising meta-data annotated in any description language as described by the state of the art.
- a Meta-Data Parser (2),(3)(see Fig. 3), a module that extracts for each media object out of the Media Vault or Cache (1) the meta-data.
- Facts and Story database (6) (See Fig. 3). A database holding and gathering facts on different meta-data items. These facts can be location, names, date, time etc. But is can also be weather information, or media styles. The Facts and Story database can be populated via the Facts and Story Discovery module (4) (e.g. by using external data sources (5)) (See Fig. 3). This module can use state of the art spider technology to fill the database with data comprising or consisting of facts with a list of possible meta-data entries it can relate to. This module (4) may populate the database every time a new media object or a new group of media objects is uploaded to the Media Vault or Cache (1) the system ("Narrative Description Generator") is linked to. State of the art algorithms can be used to optimize the database management scheme holding information that can be used across different media objects. The Fact and Story database (6) can comprise a semantic ontology with nodes that associate to the different meta-data types of the media object. With every leaf in ontology tree an extra field can be associated describing the style of the information. (Example of styles can be, business, humor, trivia, facts, etc ...) The Fact and Story database can have many ontologies (where one of them can be "style").
- A Narration engine (8)(9)(See Fig. 3). This engine can take the media objects meta-data and look up the possible matches out of the Facts and Story database. It can put together the different facts or storylines and build an extra data layer out of it, which may be experienced by a user interacting with a human-machine interfacing device as a story. The engine (8) (9) can take into account the type of layer it has to generate and the type of media object it has to add this layer to (e.g. if the media object is a movie about city X, the Narration Engine can be told (for instance by means of user interaction) to use subtitles. The Narration engine can then calculate out of the length of a movie how many sentences it can add into the layer. Constraint Rules (12) for these constraints can be described in the Story Constraint Module (10) (See Fig. 3) which can be part of the Narration Engine (8) (9). This module can be a rule based system which a Northbound Interface that can take in new rules (in a state of the art description language), for instance by interacting with the user via the human-machine interfacing device (7).
- Narrative Description Generator Interaction Module (See Fig. 3) (7), (11), (10). This module handles all user interaction and offers users possibility to select types of extra layers they want generated upon their linked media objects. Optional some user preferences can be set in the constraint rules (12) to influence the outcome of the describing story.

Further, the constraint rules (12) and story constraint module (10) may also comprise an indication for a style of a generated story. A style can be an object that describes via constraints and semantic rules how an extra data layer (experienced as a story by a user) should be build up. Styles can be constructed for instance by using a style description language, which can be a rule based language.

While some embodiments described herein include some but not other features included in other embodiments, combinations of features of different embodiments are meant to be within the scope of the invention, and form different embodiments, as would be understood by the skilled person.

While the principles of the invention have been set out above in connection with specific embodiments, it is to be clearly understood that this description is merely made by way of example and not as a limitation of the scope of protection which is determined by the appended claims.

## Claims

1. A system for automatically generating selected associated information and outputting it to a human-machine interfacing device (7) in the form a an extra data layer for a set of at least one media object, comprising
- a means for parsing said set of media objects for meta-data (2);
- a means for searching for associated information relating to said meta-data (4) in a database (5); **characterised in that** it further comprises
- means for generating said extra data layer (9), based on a set of constraint rules (12), said means being adapted for selecting information from said associated information, respecting the available output capacity for said human-machine interfacing device;
- means for outputting said selected associated information (11) to said human-machine interfacing device (7).

2. A system according to claim 1, further comprising a means for determining the available output capacity for said extra data layer for said human-machine interfacing device (8).

3. A system according to claim 1, further comprising a data storage means for storing said set of media objects (1).

4. A system according to claim 1, further comprising a means for storing said meta-data(3).

5. A system according to claim 1, further comprising a means for storing said associated information (6).

6. A system according to claim 1, wherein said means for determining the available output capacity is adapted for retrieving the time period available for said extra data layer, which is time dependent.

7. A system according to claim 1, wherein said means for determining the available output capacity is adapted for retrieving the available displaying surface of the human-machine interfacing device.

8. A system according to claim 1, further comprising a means for setting and modifying said constraint rules.

9. A method for automatically generating an extra data layer for a set of at least one media object, comprising
- parsing said set of media objects for meta-data;
- searching for associated information relating to said meta-data in a database;
- outputting said associated information to said human-machine interfacing device;
**characterised in that** it further comprises
- determining the available output capacity of a human-machine interfacing device for said extra data layer;
- generating said extra data layer, based on a set of constraint rules, by selecting information from said associated information, selected associated information, hereby respecting said available output capacity.

10. A method according to claim 9, wherein determining the available output capacity of a human-machine interfacing device for said extra data layer comprises retrieving the available time period available for said extra data layer, which is time dependent.

11. A method according to claim 9, wherein determining the available output capacity of a human-machine interfacing device for said extra data layer comprises retrieving the available displaying surface of the human-machine interfacing device.

12. A module adapted for generating an extra data layer for a set of at least one media object, based on selected associated information for said set of media object, **characterised in that** said module comprises a means for determining the available output capacity for said extra data layer for a predetermined human-machine interfacing device.

13. A module according to claim 11, further comprising a means for storing a set of constraint rules (12) defining constraints for the generation of said extra data layer.
